# EUROPEAN PATENT SPECIFICATION

(11) **EP 4 253 436 B1**
(45) Date of publication and mention of the grant of the patent: **28.10.2026**
(21) Application number: 21897734.6
(22) Date of filing: 11.11.2021
(51) Int. Cl.: C08F 236/08, H01M 4/13, H01M 4/139, H01M 4/62, H01M 10/0566, H01M 10/0525, C08F 212/08, C08F 220/06

(54) **BINDER COMPOSITION FOR NON-AQUEOUS SECONDARY BATTERY ELECTRODE, SLURRY COMPOSITION FOR NON-AQUEOUS SECONDARY BATTERY ELECTRODE, ELECTRODE FOR NON-AQUEOUS SECONDARY BATTERY, AND NON-AQUEOUS SECONDARY BATTERY**
BINDEMITTELZUSAMMENSETZUNG FÜR ELEKTRODE EINER WASSERFREIEN SEKUNDÄRBATTERIE, SCHLAMMZUSAMMENSETZUNG FÜR ELEKTRODE EINER WASSERFREIEN SEKUNDÄRBATTERIE, ELEKTRODE FÜR WASSERFREIE SEKUNDÄRBATTERIE UND WASSERFREIE SEKUNDÄRBATTERIE
COMPOSITION DE LIANT POUR ÉLECTRODE DE BATTERIE SECONDAIRE NON AQUEUSE, COMPOSITION DE BOUILLIE POUR ÉLECTRODE DE BATTERIE SECONDAIRE NON AQUEUSE, ÉLECTRODE POUR BATTERIE SECONDAIRE NON AQUEUSE, ET BATTERIE SECONDAIRE NON AQUEUSE

(30) Priority: 30.11.2020 JP 2020199140
(43) Date of publication of application: 04.10.2023
(73) Proprietor: Zeon Corporation, Tokyo 100-8246 (JP)
(72) Inventor: AIHARA, Shunjin, Tokyo 100-8246 (JP)
(74) Representative: Maiwald GmbH
(86) International application number: PCT/JP2021/041608
(87) International publication number: WO 2022/113760

(56) References cited:
- EP-A1- 3 691 003
- EP-A1- 4 210 134
- WO-A1-2015/098008
- JP-A- 2008 038 073
- JP-A- 2010 129 186
- JP-A- 2020 516 021

## Description

### TECHNICAL FIELD

The present invention relates to a binder composition for a non-aqueous secondary battery electrode, a slurry composition for a non-aqueous secondary battery electrode, an electrode for a non-aqueous secondary battery, and a non-aqueous secondary battery.

### BACKGROUND

Non-aqueous secondary batteries (hereinafter, also referred to simply as "secondary batteries"), such as lithium ion secondary batteries, have characteristics such as compact size, light weight, high energy density, and the ability to be repeatedly charged and discharged, and are used in a wide variety of applications. Consequently, in recent years, studies have been made to improve electrodes and other battery components with the aim of achieving even higher non-aqueous secondary battery performance.

An electrode used for a secondary battery such as a lithium ion secondary battery normally includes a current collector and an electrode mixed material layer (positive electrode mixed material layer or negative electrode mixed material layer) formed on the current collector. The electrode mixed material layer is formed by, for example, applying a slurry composition containing an electrode active material, a binder-containing binder composition, and other materials, onto the current collector, and then drying the applied slurry composition.

In recent years, there have been attempts to improve binder compositions used in the formation of electrode mixed material layers in order to further improve secondary battery performance.

For example, PTLs 1 to 5 each describe a binder compositions for a non-aqueous secondary battery electrode, using an aromatic vinyl/conjugated diene-based copolymer. Specifically, PTL 1 describes a composition containing a polymer in which a styrene/isoprene-based copolymer is sulfonated. PTL 2 describes a binder composition for a lithium ion secondary battery negative electrode, which contains an aromatic vinyl/aliphatic conjugated diene/ethylenically unsaturated carboxylic acid/(meth)acrylic acid-based particulate copolymer such as a styrene/butadiene/ethylenically unsaturated carboxylic acid/(meth)acrylic acid-based particulate copolymer. PTL 3 describes a binder composition for a non-aqueous secondary battery electrode, which contains a particulate polymer formed from a graft polymer in which a hydrophilic graft chain is grafted into a core particle containing an aromatic vinyl/isoprene-based copolymer. PTL 4 describes a binder for an anode of a secondary battery comprising a binder particle having a core-shell structure, wherein the binder particle having a core-shell structure comprises a copolymer core particle containing a repeating unit derived from an isoprene-based monomer; and a copolymer shell located on the surface of the core particle and containing a repeating unit derived from a butadiene-based monomer. PTL 5 describes a binder composition for a secondary battery comprising a polymer A and a solvent, wherein the polymer A includes an amide group-containing monomer unit and a carboxylic acid ester-containing monomer unit including an alkyl chain having a carbon number of not less than 2 and not more than 9, and content of the carboxylic acid ester-containing monomer unit in the polymer A is not less than 12 mass% and not more than 28 mass%.

### CITATION LIST

### Patent Literature

PTL 1: WO 2011/024789 A1
PTL 2: WO 2015/098008 A1
PTL 3: WO 2019/172281 A1
PTL 4: EP 4210134 A1
PTL 5: EP 3691003 A1

### SUMMARY

### (Technical Problem)

However, the conventional binder composition for a non-aqueous secondary battery electrode using an aromatic vinyl/conjugated diene-based copolymer as described above has room for improvement in improving stability of a slurry composition using the binder composition and peel strength of an electrode formed using the binder composition to cause a secondary battery to deliver excellent performance.

Accordingly, it could be helpful to provide a binder composition for a non-aqueous secondary battery electrode and a slurry composition for a non-aqueous secondary battery electrode, which are excellent in stability as a slurry composition and can form an electrode excellent in peel strength.

Moreover, it could be helpful to provide an electrode for a non-aqueous secondary battery that has excellent peel strength and can form a non-aqueous secondary battery that delivers excellent performance, as well as a non-aqueous secondary battery that delivers excellent performance by improving peel strength of the electrode.

### (Solution to Problem)

The inventor conducted diligent investigation with the aim of solving the problems set forth above. Through this investigation, the inventor made a new discovery that the use of a binder composition containing a particulate polymer formed from an aromatic vinyl/conjugated diene-based random copolymer, which uses conjugated diene containing isoprene and has a percentage content of a structural unit derived from each monomer in a predetermined range, can improve stability of a slurry composition using the binder composition and peel strength of an electrode formed using the binder composition to cause a secondary battery to deliver excellent performance. The inventor completed the present invention based on this discovery.

The present invention is defined by the attached claims. Specifically, this invention aims to advantageously solve the problems set forth above by providing a binder composition for a non-aqueous secondary battery electrode comprising: a particulate polymer formed from a random copolymer containing a structural unit derived from an aromatic vinyl monomer, a structural unit derived from a conjugated diene monomer, and a structural unit derived from an acid monomer, in which the structural unit derived from an aromatic vinyl monomer has a percentage content of more than 5 mass% and 40 mass% or less relative to 100 mass% of the particulate polymer, and the structural unit derived from a conjugated diene monomer contains a structural unit derived from isoprene, and the structural unit derived from isoprene has a percentage content of 20 mass% or more relative to total 100 mass% of the structural unit derived from an aromatic vinyl monomer, the structural unit derived from a conjugated diene monomer, and the structural unit derived from an acid monomer. Through use of a binder composition containing a particulate polymer formed from a random copolymer, in which the structural unit derived from a conjugated diene monomer contains a structural unit derived from isoprene, and the percentage content of the structural unit derived from each monomer is in a predetermined range, as set forth above, it is possible to improve stability of a slurry composition using the binder composition and peel strength of an electrode formed using the binder composition to cause a secondary battery to deliver excellent performance.

In this disclosure, the "structural unit" of a polymer means a "repeating unit derived from a monomer, which is included in a polymer obtained using the monomer".

In this disclosure, the percentage content of a structural unit derived from each monomer can be measured using ¹H-NMR.

In the binder composition for a non-aqueous secondary battery electrode according to the present invention, the structural unit derived from an acid monomer preferably has a percentage content of 3 mass% or more and 9 mass% or less relative to 100 mass% of the particulate polymer. When the percentage content of the structural unit derived from an acid monomer is within the range set forth above, any one or more of stability as a slurry composition and peel strength of an electrode can be improved.

In the binder composition for a non-aqueous secondary battery electrode according to the present invention, the particulate polymer preferably has an average particle diameter of 60 nm or more and 300 nm or less. When the average particle diameter is within the range set forth above, stability as a slurry composition can be improved.

The binder composition for a non-aqueous secondary battery electrode according to the present invention has a pH of 6 or more and 9 or less. When the pH is within the range set forth above, the particulate polymer can be stably maintained to contribute to improve stability as a slurry composition.

It is preferable that the binder composition for a non-aqueous secondary battery electrode contains an aqueous phase containing an acidic water-soluble polymer, and the acidic water-soluble polymer has a weight-average molecular weight of 10,000 or more and 100,000 or less. When the weight-average molecular weight of the acidic water-soluble polymer contained in the aqueous phase is within the range set forth above, peel strength of an electrode can be improved, while maintaining coatability of a slurry composition.

This invention aims to advantageously solve the problems set forth above by providing a slurry composition for a non-aqueous secondary battery electrode comprising the binder composition for a non-aqueous secondary battery electrode set forth above, an electrode active material, and at least one of a dispersant and a viscosity modifier. As a result of the slurry composition comprises the binder composition for a non-aqueous secondary battery electrode set forth above, stability as a slurry composition is excellent, and an electrode excellent in peel strength can be formed to cause a secondary battery to deliver excellent performance.

Furthermore, this invention aims to advantageously solve the problems set forth above by providing an electrode for a non-aqueous secondary battery comprising an electrode mixed material layer formed using the slurry composition for a non-aqueous secondary battery electrode set forth above. Through use of the slurry composition for a non-aqueous secondary battery electrode set forth above, it is possible to obtain an electrode for a non-aqueous secondary battery, which has excellent peel strength and can form a non-aqueous secondary battery that delivers excellent performance.

This invention also aims to advantageously solve the problems set forth above by providing a non-aqueous secondary battery comprising a positive electrode, a negative electrode, a separator, and an electrolyte solution, and at least one of the positive electrode and the negative electrode is the electrode for a non-aqueous secondary battery set forth above. Through use of the electrode for a non-aqueous secondary battery set forth above, peel strength of the electrode is improved to obtain a non-aqueous secondary battery that delivers excellent performance.

### (Advantageous Effect)

With the binder composition for a non-aqueous secondary battery electrode according to the present invention and slurry composition for a non-aqueous secondary battery electrode according to the present invention, stability as a slurry composition is excellent, and an electrode excellent in peel strength can be formed to cause a secondary battery to deliver excellent performance.

Moreover, the electrode for a non-aqueous secondary battery according to the present invention has excellent peel strength and can form a non-aqueous secondary battery that delivers excellent performance.

Furthermore, according to the present invention, peel strength of an electrode can be improved to obtain a non-aqueous secondary battery that delivers excellent performance.

### DETAILED DESCRIPTION

The following provides a detailed description of embodiments of the present invention.

The binder composition for a non-aqueous secondary battery electrode according to the present invention can be used in preparation of the slurry composition for a non-aqueous secondary battery electrode according to the present invention and can be prepared using, for example, a preparation method described herein. Moreover, a slurry composition for a non-aqueous secondary battery electrode, which is prepared using the binder composition for a non-aqueous secondary battery electrode according to the present invention, can be used in production of an electrode of a non-aqueous secondary battery such as a lithium ion secondary battery. Furthermore, the non-aqueous secondary battery according to the present invention uses the electrode for a non-aqueous secondary battery according to the present invention, which is formed using the slurry composition for a non-aqueous secondary battery electrode according to the present invention.

The binder composition for a non-aqueous secondary battery electrode, slurry composition for a non-aqueous secondary battery electrode, and electrode for a non-aqueous secondary battery according to the present invention are preferably used for a negative electrode, and the non-aqueous secondary battery according to the present invention preferably uses the electrode for a non-aqueous secondary battery according to the present invention as a negative electrode.

### (Binder composition for non-aqueous secondary battery electrode)

The binder composition for a non-aqueous secondary battery electrode according to the present invention contains a particulate polymer formed from a random copolymer containing a structural unit derived from an aromatic vinyl monomer, a structural unit derived from a conjugated diene monomer, and a structural unit derived from an acid monomer, in which the structural unit derived from an aromatic vinyl monomer has a percentage content of more than 5 mass% and 40 mass% or less relative to 100 mass% of the particulate polymer, and the structural unit derived from a conjugated diene monomer contains a structural unit derived from isoprene, and the structural unit derived from isoprene has a percentage content of 20 mass% or more relative to total 100 mass% of the structural unit derived from an aromatic vinyl monomer, the structural unit derived from a conjugated diene monomer, and the structural unit derived from an acid monomer. Moreover, the binder composition for a non-aqueous secondary battery electrode according to the present invention normally further contains a dispersion medium such as water (aqueous phase). The binder composition for a non-aqueous secondary battery electrode according to the present invention has the composition set forth above and thus can improve stability of a slurry composition using the binder composition and peel strength of an electrode formed using the binder composition to cause a secondary battery to deliver excellent performance.

### <Particulate polymer>

The particulate polymer is a component that functions as a binder. Moreover, at an electrode mixed material layer formed using the slurry composition containing the binder composition, the particulate polymer holds components such as an electrode active material such that these components do not detach from the electrode mixed material layer.

Further, the particulate polymer is a water-insoluble particle formed from a predetermined random copolymer. Note that, when a particle of a polymer is referred to as "water-insoluble" in this disclosure, this means that when 0.5 g of the polymer is dissolved in 100 g of water at a temperature of 25 °C, insoluble content is 90 mass% or more.

### [Random copolymer]

The random copolymer that forms the particulate polymer is a random copolymer containing a structural unit derived from an aromatic vinyl monomer, a structural unit derived from a conjugated diene monomer, and a structural unit derived from an acid monomer, in which the structural unit derived from an aromatic vinyl monomer has a percentage content of more than 5 mass% and 40 mass% or less relative to 100 mass% of the particulate polymer, and the structural unit derived from a conjugated diene monomer contains a structural unit derived from isoprene, and the structural unit derived from isoprene has a percentage content of 20 mass% or more relative to total 100 mass% of the structural unit derived from an aromatic vinyl monomer, the structural unit derived from a conjugated diene monomer, and the structural unit derived from an acid monomer. When the polymer that forms the particulate polymer is a random copolymer, any one or more of stability as a slurry composition and peel strength of the formed electrode can be further improved.

### -Structural unit derived from aromatic vinyl monomer-

Examples of the structural unit derived from an aromatic vinyl monomer that constitutes the random copolymer include structural units derived from an aromatic monovinyl compound such as styrene, styrene sulfonic acid and salts thereof, α-methyl styrene, p-t-butylstyrene, butoxystyrene, vinyltoluene, chlorostyrene, and vinylnaphthalene. Of these structural units, the structural unit derived from styrene is preferable. One of these structural units may be used individually or two or more of these structural units may be used in combination, but one of these structural units is preferably used individually.

The percentage content of the structural unit derived from an aromatic vinyl monomer in the random copolymer is more than 5 mass%, and preferably 15 mass% or more, and is 40 mass% or less, and preferably 30 mass% or less, relative to 100 mass% of the particulate polymer. When the percentage content of the structural unit derived from an aromatic vinyl monomer is more than the lower limit set forth above, stability as a slurry composition can be further improved. On the other hand, when the percentage content of the structural unit derived from an aromatic vinyl monomer is equal to or less than the upper limit set forth above, any one or more of peel strength of the formed electrode, internal resistance characteristics of a secondary battery, and cycle characteristics of a secondary battery can be further enhanced.

### -Structural unit derived from conjugated diene monomer-

The structural unit derived from a conjugated diene monomer that constitutes the random copolymer contains a structural unit derived from isoprene. Specifically, all of the structural units derived from a conjugated diene monomer may be the structural units derived from isoprene, or the structural units derived from a conjugated diene monomer may contain the structural units derived from isoprene and structural units derived from one type or two or more types of conjugated diene monomers other than isoprene. Examples of the structural unit derived from a conjugated diene monomer other than isoprene include structural units derived from an aliphatic conjugated diene monomer such as 1,3-butadiene, 2-methyl-1,3-butadiene, 2,3-dimethyl-1,3 butadiene, 2-chloro-1,3-butadiene, substituted linear conjugated pentadienes, and substituted and branched conjugated hexadienes. Of these structural units, the structural unit derived from 1,3-butadiene is preferable. All of the structural units derived from a conjugated diene monomer are preferably the structural units derived from isoprene. As a result of the particulate polymer containing the structural unit derived from isoprene, dusting characteristics during electrode formation and peel strength of the formed electrode can be further enhanced, while enhancing cycle characteristics of a secondary battery.

The percentage content of the structural unit derived from isoprene in the random copolymer is 20 mass% or more, and preferably 50 mass% or more, relative to total 100 mass% of the structural unit derived from an aromatic vinyl monomer, the structural unit derived from a conjugated diene monomer, and the structural unit derived from an acid monomer. Although no specific limitations are placed on the upper limit of the percentage content, the percentage content may be, for example, 94 mass% or less, and preferably 87 mass% or less. When the percentage content of the structural unit derived from isoprene is equal to or more than the lower limit set forth above, any one or more of dusting characteristics during electrode formation and peel strength of the formed electrode can be further enhanced.

### -Structural unit derived from acid monomer-

The structural unit derived from an acid monomer that constitutes the random copolymer is preferably a structural unit derived from a monomer having carbon-to-carbon double bond and an acidic group. Examples of the structural unit derived from an acid monomer as set forth above include a structural unit derived from a carboxyl group-containing monomer, a structural unit derived from a sulfo group-containing monomer, and a structural unit derived from a phosphate group-containing monomer.

Examples of the "carboxyl group-containing monomer" of the "structural unit derived from a carboxyl group-containing monomer" include monocarboxylic acids and derivatives thereof, and dicarboxylic acids, acid anhydrides thereof, and derivatives of dicarboxylic acids and acid anhydrides thereof.

Examples of monocarboxylic acids include acrylic acid, methacrylic acid, and crotonic acid.

Examples of monocarboxylic acid derivatives include 2-ethyl acrylic acid, isocrotonic acid, α-acetoxy acrylic acid, β-trans-aryloxy acrylic acid, and α-chloro-β-E-methoxy acrylic acid.

Examples of dicarboxylic acids include maleic acid, fumaric acid, and itaconic acid.

Examples of dicarboxylic acid derivatives include methyl maleic acid, dimethyl maleic acid, phenyl maleic acid, chloro-maleic acid, dichloro-maleic acid, fluoromaleic acid, and maleic acid monoesters such as butyl maleate, nonyl maleate, decyl maleate, dodecyl maleate, octadecyl maleate, and fluoroalkyl maleate.

Examples of acid anhydrides of dicarboxylic acids include maleic anhydride, acrylic anhydride, methyl maleic anhydride, dimethyl maleic anhydride, and citraconic anhydride.

Moreover, an acid anhydride that produces a carboxyl group upon hydrolysis can also be used as a carboxyl group-containing monomer.

Furthermore, ethylenically unsaturated polybasic carboxylic acids such as butene tricarboxylic acid, and partial esters of ethylenically unsaturated polybasic carboxylic acids such as monobutyl fumarate and mono2-hydroxypropyl maleate can also be used as a carboxyl group-containing monomer.

Moreover, examples of the "sulfo group-containing monomer" of the "structural unit derived from a sulfo group-containing monomer" include vinyl sulfonic acid (ethylene sulfonic acid), methyl vinyl sulfonic acid, (meth)allyl sulfonic acid, and 3-allyloxy-2-hydroxypropane sulfonic acid.

In this disclosure, "(meth)allyl" is used to indicate "allyl" and/or "methallyl".

Furthermore, examples of the "phosphate group-containing monomer" of the "structural unit derived from a phosphate group-containing monomer" include 2-(meth)acryloyloxyethyl phosphate, methyl-2-(meth)acryloyloxyethyl phosphate, and ethyl-(meth)acryloyloxyethyl phosphate.

In this disclosure, "(meth)acryloyl" is used to indicate "acryloyl" and/or "methacryloyl".

One of the structural units derived from an acid monomer as set forth above may be used individually, or two or more of the structural units derived from an acid monomer as set forth above may be used in combination. The structural unit derived from an acid monomer as set forth above is preferably a structural unit derived from an acrylic acid monomer, a structural unit derived from a methacrylic acid monomer, and a structural unit derived from an itaconic acid monomer, and more preferably a structural unit derived from a methacrylic acid monomer.

Although no specific limitations are placed on the percentage content of the structural unit derived from an acid monomer in the random copolymer, the percentage content is preferably 1 mass% or more, and more preferably 3 mass% or more, and is preferably 20 mass% or less, and more preferably 9 mass% or less, relative to 100 mass% of the particulate polymer.

### -Structural units derived from other monomers-

The random copolymer may optionally further contain structural units derived from other monomers. The structural units derived from other monomers as set forth above are preferably structural units derived from monomers having carbon-to-carbon double bond. Examples of the structural units derived from other monomers include structural units derived from a nitrile group-containing monomer such as acrylonitrile and methacrylonitrile; structural units derived from a (meth)acrylic acid ester monomer unit such as acrylic acid alkyl ester and methacrylic acid alkyl ester; structural units derived from a hydroxy group-containing (meth)acrylic acid ester monomer having a hydroxy group in the molecule, such as 2-hydroxyethyl acrylate and 2-hydroxyethyl methacrylate; structural units derived from an acrylamide monomer; structural units derived from a hydroxyethylacrylamide monomer; structural units derived from a vinyl acetate monomer; structural units derived from a methoxy-polyethylene glycol acrylate monomer; and structural units derived from a tetrahydrofurfuryl acrylate monomer. In the present description, "(meth)acrylic acid" is used to indicate "acrylic acid" and/or "methacrylic acid".

### [Three-dimensional structure of particulate polymer]

The particulate polymer may be a particle having a uniform structural unit composition (type and percentage content of the structural unit) or may be a particle having a non-uniform structural unit composition. Examples of the particle having a non-uniform structural unit composition include a particle having a core-shell structure in which the core portion and the shell portion have different structural unit compositions and a particle in which only the core part has a different structural unit composition. Examples of the particle having a core-shell structure include a particle consisting of a core portion without containing a structural unit derived from isoprene and a shell portion containing a structural unit derived from isoprene. Moreover, a particle having a uniform structural unit composition and having a core-shell structure having different crosslink densities may be used.

The structural unit composition (type and percentage content of the structural unit) of the random copolymer defined above refers to a structural unit composition in the whole of all particulate polymers contained in the binder composition for a non-aqueous secondary battery electrode. Therefore, for example, when the particulate polymer is a particle having a non-uniform structural unit composition such as a core-shell structure, the structural unit composition of the random copolymer refers to a structural unit composition in the whole particle including the core portion and the shell portion.

### [Average particle diameter]

The average particle diameter of the particulate polymer is preferably 60 nm or more, and more preferably 90 nm or more, and is preferably 300 nm or less, and more preferably 200 nm or less.

### <Aqueous phase>

The binder composition for a non-aqueous secondary battery electrode according to the present invention normally contains water as a dispersion medium of the particulate polymer.

The pH of the aqueous phase is 6.0 or more, preferably 7.0 or more, and is 9.0 or less, and preferably 8.0 or less. When the pH is within the range set forth above, the particulate polymer can be stably maintained to contribute to stability improvement as a slurry composition. Adjustment of pH may be performed by adding alkali species to the aqueous phase. Examples of the alkali species include lithium hydroxide, sodium hydroxide, potassium hydroxide, and ammonia water, and ammonia water is preferable because aggregates are less likely to be generated due to additional shock during alkali neutralization.

The aqueous phase may contain an acidic water-soluble polymer. The acidic water-soluble polymer contained in the aqueous phase is polymerized and produced as a side product from a monomer, a raw material of the particulate polymer, during production of the particulate polymer by polymerization. The acidic water-soluble polymer as set forth above is a polymer containing any one or more of the structural unit derived from an aromatic vinyl monomer, the structural unit derived from a conjugated diene monomer, and the structural unit derived from an acid monomer, which constitute the particulate polymer. The weight-average molecular weight of the acidic water-soluble polymer as set forth above is preferably 5,000 or more, and more preferably 10,000 or more, and is preferably 200,000 or less, and more preferably 100,000 or less. When the weight-average molecular weight of the acidic water-soluble polymer is smaller than the lower limit set forth above, peel strength decreases. Thus, the weight-average molecular weight is preferably equal to or more than the lower limit set forth above. When the weight-average molecular weight of the acidic water-soluble polymer is greater than the upper limit set forth above, viscosity of the binder increases, making coating impossible. Thus, the weight-average molecular weight is preferably equal to or less than the upper limit set forth above.

The aqueous phase may contain additives such as an antioxidant and a preservative.

Examples of the antioxidant include a hindered phenol-based antioxidant (e.g., 4-[[4,6-bis(octylthio)-1,3,5-triazin-2-yl]amino]-2,6-di-tertbutylphenol, 2,6-di-tert-butyl-p-cresol, stearyl 3-(3,5-di-tert-butyl-4-hydroxyphenyl)propionate, pentaerythritol tetrakis[3-(3,5-di-tert-butyl-4-hydroxyphenyl)propionate], and 2,4,6-tris(3',5'-di-tert-butyl-4'-hydroxybenzyl)mesitylene), an oligomer-type phenolic antioxidant (e.g., WINGSTAY L), a phosphite antioxidant (e.g., 3,9-bis(octadecyloxy)-2,4,8,10-tetraoxa-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, 2,2-methylenebis(4,6-di-t-butylphenyl)2-ethylhexyl phosphite, and tris(2,4-di-tert-butylphenyl) phosphite), and a sulfuric antioxidant (e.g., didodecyl 3,3'-thiodipropionate).

The additive amount of the antioxidant is preferably 0.1 mass% or more, and more preferably 1 mass% or more, and is preferably 10 mass% or less, and more preferably 5 mass% or less, relative to total 100 mass% of the structural unit derived from an aromatic vinyl monomer, the structural unit derived from a conjugated diene monomer, and the structural unit derived from an acid monomer.

Examples of the preservative include known preservatives such as an isothiazoline-based compound and 2-bromo-2-nitro-1,3-propanediol. The isothiazoline-based compound is not specifically limited, and examples thereof include isothiazoline-based compounds described in JP 2013-211246 A, JP 2005-097474 A, and JP 2013-206624 A. One preservative may be used individually, or two or more preservatives may be used in combination. As the preservative, 1,2-benzisothiazolin-3-one, 2-methyl-4-isothiazolin-3-one, 5-chloro-2-methyl-4-isothiazolin-3-one, and 2-bromo-2-nitro-1,3-propanediol are preferable, and 1,2-benzisothiazolin-3-one is more preferable.

The amount of the preservative contained in the binder composition is preferably 0.01 parts by mass or more, and is preferably 0.5 parts by mass or less, more preferably 0.4 parts by mass or less, and further preferably 0.3 parts by mass or less, per 100 parts by mass of the binder. When the content of the preservative is 0.01 parts by mass or more per 100 parts by mass of the binder, aggregate production in the binder composition after long-term storage can be further reduced. When the content of the preservative is 0.5 parts by mass or less, adhesiveness of the functional layer can be sufficiently improved.

### <Method of preparing binder composition>

The binder composition for a non-aqueous secondary battery electrode according to the present invention can be prepared by polymerizing monomers (the aromatic vinyl monomer, the conjugated diene monomer, the acid monomer, and optionally other monomers), which will be the source of the structural units contained in the particulate polymer, in an emulsion. Examples of the preparation method as set forth above include batch-type emulsion polymerization method, emulsion (Em) prop method, and seed polymerization method, and the batch-type emulsion polymerization method is preferable.

The batch-type emulsion polymerization method may be performed, for example, in the following procedure. The monomers (the aromatic vinyl monomer, the conjugated diene monomer, the acid monomer, and optionally other monomers), which will be the source of the structural units contained in the particulate polymer, is mixed with water, an emulsifier, and a polymerization initiator. The mixture (emulsion) is heated to perform polymerization reaction. The reaction is terminated through cooling once a predetermined polymerization conversion rate is reached to obtain a mixture containing the particulate polymer. Unreacted monomers are removed from the mixture. The pH of the mixture is adjusted to be within the range of pH of the aqueous phase set forth above, and the additive (e.g., antioxidant) set forth above is optionally added to the mixture to obtain a water dispersion as a binder composition for a non-aqueous secondary battery electrode. All of the aromatic vinyl monomer and the conjugated diene monomer are preferably added at the beginning. All of the acid monomer and optionally added other monomers may be added at the beginning, or the acid monomer and optionally added other monomers may be partially added stepwise. Heating may be performed, for example, at 40 °C or more, 45 °C or more, 50 °C or more, 55 °C or more, or 60 °C or more, and at 90 °C or less, 85 °C or less, 80 °C or less, 75 °C or less, or 70 °C or less. The removal of the unreacted monomers from the mixture may be performed by, for example, thermal-vacuum distillation or steam blowing. The batch-type emulsion polymerization method can obtain, for example, a particulate polymer in which compositions of the structural unit derived from an aromatic vinyl monomer and the structural unit derived from a conjugated diene monomer are uniform.

The Em prop method may be performed, for example, in the following procedure. Monomers for core portion formation (any one or more of the aromatic vinyl monomer, the conjugated diene monomer, the acid monomer, and optionally other monomers) are mixed with water, an emulsifier, a chain transfer agent, and a polymerization initiator. Polymerization reaction is performed by heating the mixture (emulsion) to reach a predetermined polymerization conversion rate, thus obtaining a mixture containing a seed particle polymer as a core portion. Next, the monomers for core portion formation (any one or more of the aromatic vinyl monomer, the conjugated diene monomer, the acid monomer, and optionally other monomers), and optionally, an emulsifier and water were continuously added to the mixture to continue the polymerization. The reaction is terminated through cooling once a predetermined polymerization conversion rate is reached to obtain a mixture containing the particulate polymer. Unreacted monomers are removed from the mixture. The pH of the mixture is adjusted to be within the range of pH of the aqueous phase set forth above, and the additive (e.g., antioxidant) set forth above is optionally added to the mixture to obtain a water dispersion as a binder composition for a non-aqueous secondary battery electrode, which contains a particulate polymer having a core-shell structure.

The seed polymerization method can obtain a water dispersion as a binder composition for a non-aqueous secondary battery electrode, for example, by mixing a seed particle polymer formed from a polymer containing a structural unit derived from any one or more monomers of the aromatic vinyl monomer, the conjugated diene monomer, the acid monomer, and optionally other monomers, with monomers for particulate polymer formation (the aromatic vinyl monomer, the conjugated diene monomer, the acid monomer, and optionally other monomers), water, an emulsifier, a chain transfer agent, and a polymerization initiator and performing polymerization reaction in the same way as set forth above.

Examples of the emulsifier used for preparing the binder composition include alkyl diphenyl ether disulfonate, dodecylbenzenesulfonate, lauryl sulfate, or salts thereof (e.g., potassium salt and sodium salt).

Examples of the polymerization initiator used for preparing the binder composition include potassium persulfate, n-butyllithium, and ammonium persulfate.

Examples of the chain transfer agent used for preparing the binder composition include α-methyl styrene dimer, tert-dodecyl mercaptan, and 3-mercapto-1,2-propanediol.

### (Slurry composition for non-aqueous secondary battery electrode)

The slurry composition according to the present invention is a composition used for forming an electrode mixed material layer of an electrode, and contains the binder composition set forth above, an electrode active material, and at least one of a dispersant and a viscosity modifier. Specifically, the slurry composition according to the present invention contains the particulate polymer set forth above and an electrode active material, further contains at least one of a dispersant and a viscosity modifier, normally further contains a dispersion medium such as water (aqueous phase), and optionally further contains at least one selected from the group consisting of a phosphite antioxidant, a metal scavenger, and other components. Moreover, because the slurry composition according to the present invention contains the binder composition set forth above, stability as a slurry composition is excellent and an electrode excellent in peel strength can be formed to cause a secondary battery to deliver excellent performance.

### <Binder composition>

The binder composition contains a particulate polymer formed from the random copolymer. The binder composition according to the present invention set forth above, which further contains a dispersion medium such as water (aqueous phase), is normally used.

No specific limitations are placed on the amount of the binder composition in the slurry composition. The amount of the binder composition may be set such that the amount of the particulate polymer in terms of solid content per 100 parts by mass of the electrode active material, for example, is 0.5 parts by mass or more and 15 parts by mass or less.

### <Electrode active material>

As the electrode active material, known electrode active materials used for a secondary battery can be used without any specific limitations. Specifically, for example, the following electrode active material can be used without any specific limitations, as an electrode active material that may be used in the electrode mixed material layer of a lithium ion secondary battery as one example of the secondary battery.

### [Positive electrode active material]

Examples of the positive electrode active material contained in a positive electrode mixed material layer of the positive electrode in a lithium ion secondary battery include transition metal-containing compounds, such as a transition metal oxide, a transition metal sulfide, and a composite metal oxide comprising lithium and a transition metal. Examples of transition metal include Ti, V, Cr, Mn, Fe, Co, Ni, Cu, and Mo.

Specific examples of the positive electrode active material include, but are not specifically limited to, lithium-containing cobalt oxide (LiCoO₂), lithium manganate (LiMn₂O₄), lithium-containing nickel oxide (LiNiO₂), lithium-containing composite oxide of Co-Ni-Mn, lithium-containing composite oxide of Ni-Mn-Al, lithium-containing composite oxide of Ni-CoAl, olivine-type lithium iron phosphate (LiFePO₄), olivine-type manganese lithium phosphate (LiMnPO₄), lithium-rich spinel compounds represented by Liₗ₊ₓMn₂₋ₓO₄ (0 < X < 2), Li[Ni_{0.17}Li_{0.2}Co_{0.07}Mn_{0.56}]O₂, and LiNi_{0.5}Mn_{1.5}O₄.

One positive electrode active material set forth above may be used individually, or two or more positive electrode active materials may be used in combination.

### [Negative electrode active material]

Examples of the negative electrode active material contained in a negative electrode mixed material layer of the negative electrode in a lithium ion secondary battery include a carbon-based negative electrode active material, a metal-based negative electrode active material, and a negative electrode active material that is a combination thereof.

The carbon-based negative electrode active material can be defined as an active material that contains carbon as its main framework and into which lithium can be inserted (also referred to as "doping"). Specific examples of the carbon-based negative electrode active material include carbonaceous materials such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), and hard carbon; and graphitic materials such as natural graphite and artificial graphite.

The metal-based negative electrode active material is an active material that contains metal, the structure of which normally contains an element that allows insertion of lithium, and that exhibits a theoretical electric capacity per unit mass of 500 mAh/g or more when lithium is inserted. Examples of the metal-based active material include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti); and oxides, sulfides, nitrides, silicides, carbides, and phosphides of lithium metal and the simple substance of metal. Examples of the metal-based active material further include oxides such as lithium titanate.

One negative electrode active material set forth above may be used individually, or two or more negative electrode active materials set forth above may be used in combination.

### <Other components>

Examples of other components that may be contained in the slurry composition include, but are not specifically limited to, a conductive material and the same other components that may be contained in the binder composition according to the present invention. One of the other components may be used individually, or two or more of the other components may be used in combination.

### <Preparation of slurry composition>

No specific limitations are placed on a method of preparing the slurry composition.

The slurry composition can be prepared, for example, by mixing the binder composition, the electrode active material, at least one or more of a dispersant and a viscosity modifier, and other components that are used as necessary, in the presence of the aqueous phase (aqueous medium) that is normally contained in the binder composition.

Although no specific limitations are placed on a mixing method, mixing can be performed using a stirrer or a disperser, which may be normally used.

### (Electrode for non-aqueous secondary battery)

The electrode for a non-aqueous secondary battery according to the present invention includes an electrode mixed material layer formed using the foregoing slurry composition for a non-aqueous secondary battery electrode. Therefore, the electrode mixed material layer is formed from a dried product of the slurry composition set forth above and normally contains the electrode active material, a component derived from the particulate polymer, and at least one or more selected from a dispersant and a viscosity modifier, and optionally further contains at least one selected from the group consisting of a phosphite antioxidant, a metal scavenger, and other components. Components contained in the electrode mixed material layer are components that were contained in the foregoing slurry composition for a non-aqueous secondary battery electrode, and the preferred ratio of these components is the same as the preferred ratio of these components in the slurry composition. Although the particulate polymer is in a particulate form in the slurry composition, the particulate polymer may be in a particulate form or in any other form in the electrode mixed material layer formed using this slurry composition.

The electrode for a non-aqueous secondary battery according to the present invention forms the electrode mixed material layer using the foregoing slurry composition for a non-aqueous secondary battery electrode. Thus, the electrode for a non-aqueous secondary battery according to the present invention has excellent peel strength and can form a non-aqueous secondary battery that delivers excellent performance. Moreover, a secondary battery including this electrode delivers excellent performance by improving peel strength of the electrode.

### <Production of electrode for non-aqueous secondary battery>

The electrode mixed material layer of the electrode for a non-aqueous secondary battery according to the present invention can be formed, for example, using the following method:
(1) a method in which the slurry composition according to the present invention is applied onto the surface of a current collector and is then dried;
(2) a method in which a current collector is immersed in the slurry composition according to the present invention and is then dried; and
(3) a method in which the slurry composition according to the present invention is applied onto a releasable substrate and is dried to produce an electrode mixed material layer that is then transferred onto the surface of a current collector.

Of these methods, method (1) is particularly preferable since it allows simple control of the thickness of the electrode mixed material layer. Method (1) more specifically includes a step of applying the slurry composition onto a current collector (application step) and a step of drying the slurry composition that has been applied onto the current collector to form an electrode mixed material layer on the current collector (drying step).

### [Application step]

The slurry composition may be applied onto the current collector by a commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may be made of, for example, iron, copper, aluminum, nickel, stainless steel, titanium, tantalum, gold, or platinum. One of such materials may be used individually, or two or more of such materials may be used in combination in a freely selected ratio.

### [Drying step]

The slurry composition on the current collector may be dried by a commonly known method without any specific limitations. Examples of drying methods that can be used include drying by warm, hot, or low-humidity air; drying in a vacuum; and drying by irradiation with infrared light or electron beams. Through drying of the slurry composition on the current collector in this manner, an electrode mixed material layer can be formed on the current collector to thereby obtain an electrode for a non-aqueous secondary battery that includes the current collector and the electrode mixed material layer.

After the drying step, the electrode mixed material layer may be further subjected to a pressing process, such as mold pressing or roll pressing. The pressing process can improve close adherence between the electrode mixed material layer and the current collector and further increase the density of the electrode mixed material layer to be obtained. Furthermore, in a case in which the electrode mixed material layer contains a curable polymer, the polymer is preferably cured after the electrode mixed material layer has been formed.

### (Non-aqueous secondary battery)

The non-aqueous secondary battery according to the present invention includes a positive electrode, a negative electrode, an electrolyte solution, and a separator, wherein the foregoing electrode for a non-aqueous secondary battery is used as at least one of the positive electrode and the negative electrode. Because the non-aqueous secondary battery according to the present invention is produced using the foregoing electrode for a non-aqueous secondary battery as at least one of the positive electrode and the negative electrode, the non-aqueous secondary battery according to the present invention can provide excellent cycle characteristics.

Although the following describes, as one example, a case in which the secondary battery is a lithium ion secondary battery, the secondary battery according to the present invention is not limited to the following example.

### <Electrode>

Known electrodes that are used in production of secondary batteries can be used without any specific limitations in the non-aqueous secondary battery according to the present invention as an electrode other than the foregoing electrode according to the present invention for a non-aqueous secondary battery. Specifically, an electrode obtained by forming an electrode mixed material layer on a current collector by a known production method may be used as an electrode other than the foregoing electrode for a non-aqueous secondary battery according to the present invention.

### <Electrolyte solution>

The electrolyte solution is normally an organic electrolyte solution obtained by dissolving a supporting electrolyte in an organic solvent. The supporting electrolyte of a lithium ion secondary battery may, for example, be a lithium salt. Examples of the lithium salt include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable in that they easily dissolve in solvent and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte dissolves therein. Examples of suitable organic solvents that can be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixed liquid of such solvents may be used. Of these solvents, carbonates are preferable for their high dielectric constant and broad stable potential region. In general, lithium ion conductivity tends to increase when viscosity of a solvent to be used is low. Therefore, lithium ion conductivity can be adjusted through the type of solvent that is used.

The concentration of the electrolyte in the electrolyte solution can be adjusted as appropriate. Known additives may be added to the electrolyte solution.

### <Separator>

Examples of separators that can be used include, but are not specifically limited to, those described in JP 2012-204303 A. Of these separators, a fine porous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the capacity per volume.

The secondary battery according to the present invention may be produced, for example, by stacking the positive electrode and the negative electrode with the separator in-between, rolling or folding the obtained stack as necessary in accordance with the battery shape to place the stack in a battery container, injecting the electrolyte solution into the battery container, and sealing the battery container. The non-aqueous secondary battery according to the present invention uses the foregoing electrode for a non-aqueous secondary battery as at least one of the positive electrode and the negative electrode, preferably as the negative electrode. In order to prevent pressure increase inside the secondary battery and occurrence of overcharging or overdischarging, an overcurrent preventing device such as a fuse or a PTC device; an expanded metal; or a lead plate may be provided on the non-aqueous secondary battery according to the present invention as necessary. The shape of the secondary battery may be a coin type, button type, sheet type, cylinder type, prismatic type, or flat type.

### EXAMPLES

The following provides a more specific description of the present invention based on examples. However, the present invention is not limited to the following examples. In the following, "%" and "parts" used to express quantities are by mass, unless otherwise specified.

Moreover, in the case of a polymer that is produced through polymerization of a plurality of types of monomers, the proportion constituted in the polymer by a structural unit derived from each monomer, which is formed through polymerization of a monomer, is normally, unless otherwise specified, the same as the ratio (charging ratio) of each monomer among all monomers used in polymerization for forming the polymer.

In the examples and comparative examples, the following methods were used to measure and evaluate the percentage content of a structural unit derived from each monomer in a polymer, the average particle diameter of a particulate polymer, the weight-average molecular weight of an acidic water-soluble polymer contained in the aqueous phase, the viscosity stability of a slurry composition, the peel strength of an electrode, the dusting characteristics during electrode formation, the internal resistance of a secondary battery, and the cycle characteristics of a secondary battery.

### <Percentage content of structural unit derived from each monomer>

The intensity ratio of a peak derived from a structural unit derived from each monomer is determined by ¹H-NMR (nuclear magnetic resonance) method to be converted to a mass ratio.

### <Average particle diameter of particulate polymer>

The average particle diameter of a particulate polymer was measured using a laser diffraction particle size analyzer (produced by Shimadzu Corporation; product name: SALD-2300). Specifically, a binder composition (water dispersion of the particulate polymer) was prepared, and its particle size distribution (volume basis) was measured with the above analyzer to determine the average particle diameter (µm).

### <Method of measuring molecular weight of acidic water-soluble polymer in aqueous phase>

The aqueous phase was separated from the binder composition by centrifugal separation, and an acidic water-soluble polymer in the aqueous phase was measured by HPLC.

### Molecular weight measurement conditions

Column: TSKgel G2500PWXL produced by Tosoh Corporation
Mobile phase: 100 mM of sodium nitrate + 50 mM of disodium hydrogen phosphate aqueous solution/acetonitrile = 80/20
Flow rate: 1.0 mL/min
Detector: RI detector
Standard substance: pullulan

### <Viscosity stability of slurry composition>

A viscosity η₀ of the obtained slurry composition was measured using a B-type viscometer (produced by Toki Sangyo Co., Ltd.; product name: TVB-10, rotor: No.2, rotation speed: 60 rpm). Next, the slurry composition whose viscosity has been measured was stirred for 24 hours using a planetary mixer (rotation speed: 60 rpm), and a viscosity η₁ of the slurry composition after stirring was measured using a B-type viscometer (rotor: No.2, rotation speed: 60 rpm) as described above. Then, a viscosity maintenance rate Δη = η₁/η₀ × 100 (%) of the slurry composition before and after stirring was calculated, and viscosity stability of the slurry composition was evaluated based on the criteria below. The temperature during viscosity measurement was 25 °C. A viscosity maintenance rate Δη closer to 100% indicates better viscosity stability of the slurry composition.
A: Viscosity maintenance rate Δη of 90% or more and 110% or less
B: Viscosity maintenance rate Δη of 80% or more and less than 90%
C: Viscosity maintenance rate Δη of 70% or more and less than 80%
D: Viscosity maintenance rate Δη of less than 70% or more than 110%

### <Peel strength of electrode>

The produced electrode was dried for 1 hour in a vacuum dryer at 100 °C, and a specimen was obtained by cutting the electrode after drying into a rectangle 100 mm long by 10 mm wide. The specimen was placed with the surface of the electrode mixed material layer underneath, and cellophane tape was affixed to the surface of the electrode mixed material layer. Tape prescribed by JIS Z1522 was used as the cellophane tape. Moreover, the cellophane tape was fixed to a test bed. Thereafter, one end of the current collector was pulled vertically upward at a pulling speed of 50 mm/minute to peel off the current collector, and the stress during this peeling was measured. This measurement was made three times and an average value of the stress was determined. The average value was taken to be the peel strength and evaluated based on the criteria below. A larger peel strength indicates larger binding force of the electrode mixed material layer to the current collector, and thus indicates stronger adhesion.
A: Peel strength of 30 N/m or more
B: Peel strength of 20 N/m or more and less than 30 N/m
C: Peel strength of 10 N/m or more and less than 20N/m
D: Peel strength of less than 10 N/m

### <Dusting characteristics during electrode formation>

Dusting characteristics during electrode formation were evaluated by performing a crosscut test prescribed by JIS K 5600 on the electrode. Specifically, the electrode is cut into a predetermined size, the weight of the cut electrode is measured, an incision is made from the back side of the electrode using a crosscut jig, dust from the incision is brushed off, the weight of the electrode is measured, and the dusting amount was calculated from a weight difference of the electrode before and after incision. A fewer dusting amount indicates better dusting characteristics.
A: Dusting amount of less than 0.5 mg
B: Dusting amount of 0.5 mg or more and less than 1 mg
C: Dusting amount of 1 mg or more and less than 2 mg
D: Dusting amount of 2 mg or more

### <Internal resistance of secondary battery>

In order to evaluate internal resistance of a lithium ion secondary battery, IV resistance was measured as described below. The lithium ion secondary battery was subjected to conditioning treatment by repeating the following operation three times: the lithium ion secondary battery was charged at a temperature of 25 °C with a charging rate of 0.1 C until the voltage reached 4.2 V, a 10 minutes of pause was taken, and the lithium ion secondary battery was then constant-current (CC) discharged with a discharging rate of 0.1 C until the voltage reached 3.0 V. The lithium ion secondary battery was subsequently charged to 3.75 V at 1 C (C is a value represented by rated capacity (mA)/hour (h)) at an ambient temperature of -10 °C. Thereafter, 20 seconds of charging and 20 seconds of discharging were each performed at 0.5 C, 1.0 C, 1.5 C, and 2.0 C, centering on 3.75 V. For each case, the battery voltage after 15 seconds on the charging side was plotted against the current value, and the gradient was calculated as the IV resistance (Ω). The obtained IV resistance value (Ω) was evaluated based on the criteria below, compared with the IV resistance of Comparative Example 4. A smaller IV resistance value indicates smaller internal resistance of the secondary battery.
A: less than 85% with respect to the IV resistance of Comparative Example 4
B: 85% or more and less than 95% with respect to the IV resistance of Comparative Example 4
C: 95% or more and less than 105% with respect to the IV resistance of Comparative Example 4
D: 105% or more with respect to the IV resistance of Comparative Example 4

### <Cycle characteristics of secondary battery>

A lithium ion secondary battery produced in each of the examples and comparative examples was left for 5 hours at a temperature of 25 °C after being filled with an electrolyte solution. Next, the lithium ion secondary battery was charged to a cell voltage of 3.65 V by a 0.2 C constant-current method at a temperature of 25 °C, and was then subjected to aging treatment for 12 hours at a temperature of 60 °C. The lithium ion secondary battery was subsequently discharged to a cell voltage of 3.00 V by a 0.2 C constant-current method at a temperature of 25 °C. Thereafter, constant current (CC)-constant voltage (CV) charging of the lithium ion secondary battery was performed by a 0.2 C constant-current method (upper limit cell voltage of 4.20 V) and CC discharging of the lithium ion secondary battery was performed to 3.00 V by a 0.2 C constant-current method. This charging and discharging at 0.2 C was repeated three times.

Thereafter, the lithium ion secondary battery was subjected to 100 cycles of a charge/discharge operation at an ambient temperature of 25 °C, a cell voltage of 4.20 V to 3.00 V, and a charge/discharge rate of 1.0 C. The discharge capacity of the 1st cycle was defined as X1 and the discharge capacity of the 100th cycle was defined as X2.

The capacity maintenance rate indicated by ΔC' = (X2/X1) × 100 (%) was determined using the discharge capacity X1 and the discharge capacity X2 and was evaluated based on the criteria below. A larger value for the capacity maintenance rate ΔC' indicates better cycle characteristics.
A: ΔC' of 93% or more
B: ΔC' of 90% or more and less than 93%
C: ΔC' of 87% or more and less than 90%
D: ΔC' of less than 87%

### (Example 1)

### <Preparation of binder composition containing particulate polymer (batch polymerization)>

A 5 MPa pressure vessel A equipped with a stirrer was charged with 22 parts of styrene as an aromatic vinyl monomer; 72 parts of isoprene as an aliphatic conjugated diene monomer; 2 parts of methacrylic acid as an acid monomer; 0.6 parts of alkyl diphenyl ether disulfonate as an emulsifier; 137 parts of deionized water; and 0.3 parts of potassium persulfate as a polymerization initiator. The contents of the pressure vessel A were sufficiently stirred and were then heated to a temperature of 45 °C to initiate polymerization, and then reacted for 20 hours. Heating was subsequently performed to 60 °C, and the reaction was further performed for 5 hours. Subsequently, 4 parts of methacrylic acid was added to the pressure vessel A, and the reaction was further carried out for 5 hours. The reaction was terminated through cooling at the point at which the polymerization conversion rate reached 97% to obtain a mixture containing a particulate polymer. Thereafter, unreacted monomers were removed by thermal-vacuum distillation. The mixture containing the particulate polymer was adjusted to a pH of 8 through addition of 1% ammonia aqueous solution. Further cooling was then performed, 1 part of Wingstay L dispersion as an antioxidant was added to the pressure vessel A to obtain a water dispersion containing a desired particulate polymer as a binder composition for a lithium ion secondary battery negative electrode. The obtained binder composition was used to measure the average particle diameter of the particulate polymer, and the weight-average molecular weight of an acidic water-soluble polymer contained in the aqueous phase, which was produced as a side product. Table 1 presents the results.

### <Preparation of slurry composition for non-aqueous secondary battery negative electrode>

A planetary mixer equipped with a disper blade was charged with 100 parts of artificial graphite (tap density: 0.85 g/cm³, capacity: 360 mAh/g) as a negative electrode active material, 1 part of carbon black (produced by Timcal Ltd.; product name: Super C65) as a conductive material, and 1.2 parts in terms of solid content of a 2% aqueous solution of carboxymethyl cellulose (produced by Nippon Paper Chemicals Co., Ltd.; product name: MAC-350HC) as a thickener to obtain a mixture. The obtained mixture was adjusted to a solid content concentration of 60% with deionized water and was subsequently mixed for 60 minutes at 25 °C. Next, the mixture was adjusted to a solid content concentration of 52% with deionized water and was then further mixed for 15 minutes at 25 °C to obtain a mixed solution. Deionized water and 2.0 parts in terms of solid content of the binder composition prepared as described above were added to the obtained mixed solution, and the final solid content concentration was adjusted to 48%. Further mixing was performed for 10 minutes and then a defoaming process was performed under reduced pressure to obtain a slurry composition for a negative electrode having good fluidity.

The stability of the slurry composition was evaluated during preparation of the slurry composition for a negative electrode. Table 1 presents the results.

### <Formation of negative electrode>

The obtained slurry composition for a negative electrode was applied onto copper foil (current collector) of 15 µm in thickness using a comma coater such as to have a coating weight after drying of 11 mg/cm². The applied slurry composition was dried by conveying the copper foil inside a 60°C oven for 2 minutes at a speed of 0.5 m/minute. Thereafter, heat treatment was performed for 2 minutes at 120°C to obtain a web of negative electrode.

The web of negative electrode was rolled by roll pressing to obtain a negative electrode including a negative electrode mixed material layer of 1.75 g/cm³ in density.

The dusting characteristics during negative electrode formation and the peel strength of the negative electrode were evaluated. Table 1 presents the results.

### <Formation of positive electrode>

A slurry composition for a positive electrode was obtained by mixing 100 parts of LiCoO₂ having a median diameter of 12 µm as a positive electrode active material, 2 parts of acetylene black (produced by Denki Kagaku Kogyo Kabushiki Kaisha; product name: HS-100) as a conductive material, 2 parts in terms of solid content of polyvinylidene fluoride (produced by Kureha Corporation; product name: #7208) as a binder, and N-methylpyrrolidone as a solvent such as to have a total solid content concentration of 70%, and mixing these materials using a planetary mixer.

The obtained slurry composition for a positive electrode was applied onto aluminum foil (current collector) of 20 µm in thickness using a comma coater such as to have a coating weight after drying of 23 mg/cm². The applied slurry composition was dried by conveying the aluminum foil inside a 60°C oven for 2 minutes at a speed of 0.5 m/minute. Thereafter, heat treatment was performed for 2 minutes at 120°C to obtain a web of positive electrode.

The web of positive electrode was rolled by roll pressing to obtain a positive electrode including a positive electrode mixed material layer of 4.0 g/cm³ in density.

### <Preparation of separator>

A single-layer polypropylene separator (produced by Celgard, LLC.; product name: Celgard 2500) was prepared as a separator formed from a separator substrate.

### <Production of lithium ion secondary battery>

A laminate was obtained by interposing a separator (polypropylene fine porous membrane of 20 µm in thickness) between the positive electrode for a lithium ion secondary battery after pressing and the negative electrode for a lithium ion secondary battery after pressing, which were produced as set forth above, such as to be arranged in order of separator/positive electrode/separator/negative electrode. The laminate of the electrode and the separator was wound around a 20 mm diameter core to obtain a wound body including the positive electrode, the separator, and the negative electrode. The obtained wound body was subsequently compressed in one direction at a rate of 10 mm/second until reaching a thickness of 4.5 mm to obtain a flat body. The obtained flat body had an elliptical shape in plan view, and the ratio of the major axis to the minor axis (major axis/minor axis) was 7.7.

A non-aqueous electrolyte solution (LiPF₆ solution with a concentration of 1.0 M; solvent: mixed solvent of ethylene carbonate (EC)/ethyl methyl carbonate (EMC) = 3/7 (mass ratio), with 2 volume% of vinylene carbonate (VC) further added, as an additive) was prepared.

The flat body was then housed in an aluminum laminated case together with the non-aqueous electrolyte solution. After a negative electrode lead and a positive electrode lead were connected to predetermined positions, an opening of the laminated case was heat sealed to produce a laminate-type lithium ion secondary battery as a non-aqueous secondary battery. The obtained secondary battery had a pouch shape of 35 mm in width × 48 mm in height × 5 mm in thickness and had a nominal capacity of 700 mAh.

Battery resistance and cycle characteristics of the lithium ion secondary battery were evaluated. Table 1 presents the results.

### (Example 2)

A binder composition containing a particulate polymer was prepared in the same way as in Example 1. A slurry composition for a non-aqueous secondary battery negative electrode, a negative electrode, a positive electrode, a separator, and a lithium ion secondary battery were produced or prepared in the same way as in Example 1 with the exception that the following active material 1 was used as a negative electrode active material during preparation of the slurry composition for a non-aqueous secondary battery negative electrode. Evaluations were conducted in the same manner as in Example 1. Table 1 presents the results.

Active material 1: mixture of 50 parts of alloy containing silicon (non-carbon-based negative electrode active material) and 50 parts of artificial graphite (carbon-based negative electrode active material)

### (Example 3)

A binder composition containing a particulate polymer was prepared in the same way as in Example 1. A slurry composition for a non-aqueous secondary battery negative electrode, a negative electrode, a positive electrode, a separator, and a lithium ion secondary battery were produced or prepared in the same way as in Example 1 with the exception that the following active material 2 was used as a negative electrode active material during preparation of the slurry composition for a non-aqueous secondary battery negative electrode. Evaluations were conducted in the same manner as in Example 1. Table 1 presents the results.

Active material 2: mixture of 30 parts of SiOₓ (non-carbon-based negative electrode active material) and 70 parts of artificial graphite (carbon-based negative electrode active material)

### (Example 4 and Comparative Examples 3 and 4)

A binder composition containing a particulate polymer, a slurry composition for a non-aqueous secondary battery negative electrode, a negative electrode, a positive electrode, a separator, and a lithium ion secondary battery were each produced or prepared in the same way as in Example 1 with the exception that isoprene and/or 1,3-butadiene were used in the amounts presented in Table 1 as an aliphatic conjugated diene monomer during preparation of the binder composition containing a particulate polymer. Evaluations were conducted in the same manner as in Example 1. Table 1 presents the results.

### (Example 5 to Example 11 and Comparative Examples 1 and 2)

A binder composition containing a particulate polymer, a slurry composition for a non-aqueous secondary battery negative electrode, a negative electrode, a positive electrode, a separator, and a lithium ion secondary battery were each produced or prepared in the same way as in Example 1 with the exception that the amounts of styrene and isoprene, the average particle diameter of the particulate polymer, the pH of the composition, and the molecular weight of an acidic water-soluble polymer contained in the aqueous phase were set as presented in Table 1 during preparation of the binder composition containing a particulate polymer. Evaluations were conducted in the same manner as in Example 1. Table 1 presents the results.

### (Example 12)

### <Preparation of particulate polymer (Em prop polymerization)>

A 5 MPa pressure vessel equipped with a stirrer was charged with 4 parts of styrene as an aromatic vinyl monomer; 1 part of methacrylic acid as an acid monomer; 100 parts of deionized water; 0.7 parts of dodecylbenzenesulfonate as an emulsifier; 0.1 parts of α-methyl styrene dimer as a chain transfer agent; and 0.3 parts of potassium persulfate as a polymerization initiator, for core portion formation, and then sufficiently stirred. Heating was subsequently performed to 60 °C to initiate polymerization. The polymerization was continued until the polymerization conversion rate reached 98% to obtain a seed particle polymer as a core portion. Next, 18 parts of styrene as an aromatic vinyl monomer; 72 parts of isoprene as an aliphatic conjugated diene monomer; 5 parts of methacrylic acid as an acid monomer; 0.3 parts of sodium dodecylbenzenesulfonate as an emulsifier; and 37 parts of deionized water were successively added to the identical pressure vessel, for shell portion formation, under stirring to continue the polymerization. This water dispersion was heated to 70 °C, and then cooled at the point at which the polymerization conversion rate reached 97% to terminate the reaction, and a polymer as a shell portion was formed on the outer surface of the core portion to obtain a mixture containing a particulate polymer having a core-shell structure. Subsequently, 1 part of Wingsatay L dispersion as an antioxidant was added to the identical pressure vessel to obtain a water dispersion containing the particulate polymer having a core-shell structure in which the entire outer surface of the core portion was covered with the shell portion (binder composition for a lithium ion secondary battery negative electrode). The obtained water dispersion of the particulate polymer was used to measure the average particle diameter of the particulate polymer. A slurry composition for a non-aqueous secondary battery negative electrode, a negative electrode, a positive electrode, a separator, and a lithium ion secondary battery were then produced or prepared in the same way as in Example 1. Evaluations were conducted in the same manner as in Example 1. Table 1 presents the results.

### (Comparative Example 5)

### <Preparation of particulate polymer (production of block copolymer by solution polymerization)>

### [Preparation of cyclohexane solution of block copolymer]

A pressure-resistant reactor was charged with 233.3 kg of cyclohexane; 54.2 mmol of N,N,N',N'-tetramethylethylenediamine (TMEDA); and 25.0 kg of styrene as an aromatic vinyl monomer. During stirring these materials at 40 °C, 1806.5 mmol of n-butyllithium as a polymerization initiator was added to the pressure-resistant reactor, and polymerization was performed for 1 hour while heating these materials to 50 °C. The polymerization conversion rate of styrene was 100%. Subsequently, 75.0 kg of isoprene was added to the pressure-resistant reactor continuously for 1 hour, while controlling the temperature to keep 50 °C to 60 °C. After completion of isoprene addition, the polymerization reaction was further continued for 1 hour. The polymerization conversion rate of isoprene was 100%. Next, 740.6 mmol of dichlorodimethylsilane as a coupling agent was added to the pressure-resistant reactor to perform coupling reaction for 2 hours. In order to deactivate an active terminal, 3612.9 mmol of methanol was subsequently added to the reaction solution and mixed well. Subsequently, 0.05 parts of 4-[[4,6-bis(octylthio)-1,3,5-triazin-2-yl]amino]-2,6-di-tert-butylphenol (H1) as a hindered phenol-based antioxidant; 0.09 parts of 3,9-bis(octadecyloxy)-2,4,8,10-tetraoxa-3,9-diphosphaspiro[5.5]undecane (P1) as a phosphite antioxidant; and 0.03 parts of EDTA as a metal scavenger were added to 100 parts of the reaction solution (containing 30.0 parts of polymer component) and mixed to obtain a block copolymer solution.

### [Emulsification]

Sodium alkylbenzene sulfonate was dissolved in deionized water to prepare a 5% aqueous solution.

A tank was then charged with 500 g of the obtained block copolymer solution and 500 g of the obtained aqueous solution , and preliminary mixing of these materials was performed by stirring. Next, a metering pump was used to transfer the preliminary mixture from the tank to a continuous high-performance emulsifying and dispersing device (produced by Pacific Machinery & Engineering Co., Ltd.; product name: Milder MDN303V) at a rate of 100 g/minute, and the preliminary mixture was stirred at a rotation speed of 15,000 rpm to cause emulsification of the preliminary mixture and obtain an emulsion.

Next, cyclohexane in the obtained emulsion was removed by evaporation under reduced pressure in a rotary evaporator. The emulsion obtained from this evaporation was left to separate for 1 day in a chromatographic column equipped with a stop-cock, and a lower layer portion was removed after separation to perform concentration.

Finally, an upper layer portion was filtered through a 100-mesh screen to obtain a water dispersion containing a particulate block copolymer (core particle) (block copolymer latex).

### [Graft polymerization and crosslinking]

A polymerization reaction vessel equipped with a stirrer was charged with 675 parts of deionized water, and 20 parts of methacrylic acid was subsequently added to the polymerization reaction vessel. These materials were stirred with an impeller of the polymerization reaction vessel, while 100 parts in terms of block copolymer of the obtained block copolymer latex was added to the polymerization reaction vessel to perform nitrogen substitution. Heating was then performed until the temperature reached 30 °C, while stirring the diluted block polymer latex.

Another vessel was used to prepare a solution containing 7 parts of deionized water; 0.01 parts of ferrous sulfate (produced by Chubu Chelest Co., Ltd.; product name: Frost Fe) as a reductant; and 0.32 parts of sodium formaldehyde sulfoxylate (produced by Sumitomo Seika Chemicals Co., Ltd.; product name: SFS). After the obtained solution was added to the polymerization reaction vessel, 0.35 parts of tert-butyl hydroperoxide (produced by NOF Corporation; product name: PERBUTYL H) as an oxidizing agent was added to the polymerization reaction vessel, and these materials were reacted at 30 °C for 1 hour and then further reacted at 70 °C for 2 hours. The polymerization conversion rate was 99%.

Then, a water dispersion of a particulate polymer formed from a graft polymer obtained by graft polymerizing and crosslinking the core particle containing the block copolymer was obtained.

The obtained water dispersion of the particulate polymer was used to measure the average particle diameter of the particulate polymer. A slurry composition for a non-aqueous secondary battery negative electrode, a negative electrode, a positive electrode, a separator, and a lithium ion secondary battery were then produced or prepared in the same way as in Example 1. Evaluations were conducted in the same manner as in Example 1. Table 1 presents the results.

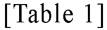

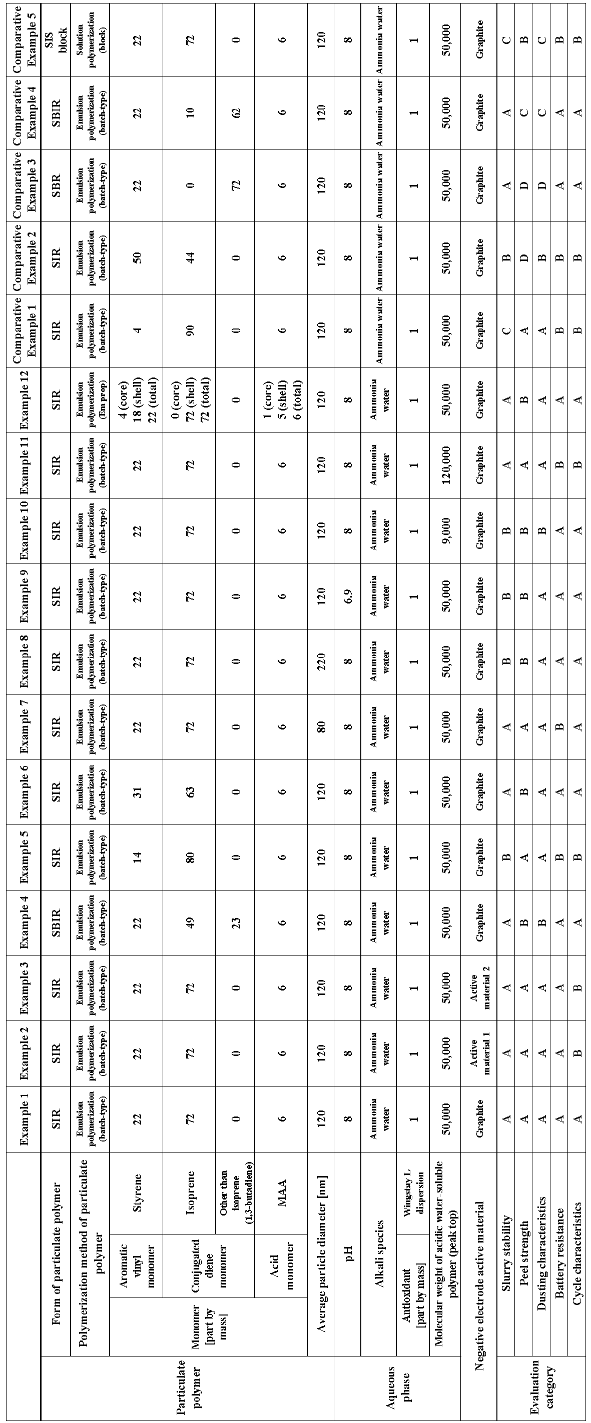

In the table, the following abbreviations are used.
SIR: styrene/isoprene-based random copolymer
SBIR: styrene/butadiene/isoprene-based random copolymer
SIS block: styrene/isoprene-based block copolymer
MAA: methacrylic acid
Em prop: emulsion prop method

It can be seen from Table 1 that, in each of Examples 1 to 12, a secondary battery excellent in internal resistance characteristics and cycle characteristics was obtained, and stability as a slurry composition, peel strength of an electrode, and dusting characteristics during electrode formation were further enhanced. Moreover, it can be seen that, in Comparative Examples 1 and 2 in which the percentage content of a structural unit derived from each monomer is out of a predetermined range, Comparative Examples 3 and 4 in which the copolymer contains no structural unit derived from isoprene, and Comparative Example 5 in which the copolymer is a block copolymer, any one or more of stability as a slurry composition, peel strength of an electrode, and dusting characteristics during electrode formation was not good.

### INDUSTRIAL APPLICABILITY

With the binder composition for a non-aqueous secondary battery electrode according to the present invention and slurry composition for a non-aqueous secondary battery electrode according to the present invention, stability as a slurry composition is excellent, and an electrode excellent in peel strength can be formed to cause a secondary battery to deliver excellent performance.

Moreover, the electrode for a non-aqueous secondary battery according to the present invention has excellent peel strength and can form a non-aqueous secondary battery that delivers excellent performance.

Furthermore, according to the present invention, peel strength of an electrode can be improved to obtain a non-aqueous secondary battery that delivers excellent performance.

## Claims

1. A binder composition for a non-aqueous secondary battery electrode, comprising: a particulate polymer formed from a random copolymer containing a structural unit derived from an aromatic vinyl monomer, a structural unit derived from a conjugated diene monomer, and a structural unit derived from an acid monomer, wherein
the structural unit derived from an aromatic vinyl monomer has a percentage content of more than 5 mass% and 40 mass% or less relative to 100 mass% of the particulate polymer, and
the structural unit derived from a conjugated diene monomer contains a structural unit derived from isoprene, and the structural unit derived from isoprene has a percentage content of 20 mass% or more relative to total 100 mass% of the structural unit derived from an aromatic vinyl monomer, the structural unit derived from a conjugated diene monomer, and the structural unit derived from an acid monomer, and wherein
the binder composition for a non-aqueous secondary battery electrode has a pH of 6 or more and 9 or less.

2. The binder composition for a non-aqueous secondary battery electrode according to claim 1, wherein the structural unit derived from an acid monomer has a percentage content of 3 mass% or more and 9 mass% or less relative to 100 mass% of the particulate polymer.

3. The binder composition for a non-aqueous secondary battery electrode according to claim 1 or 2, wherein the particulate polymer has an average particle diameter of 60 nm or more and 300 nm or less, as determined according to the Example <Average particle diameter of particulate polymer>.

4. The binder composition for a non-aqueous secondary battery electrode according to any one of claims 1 to 3, comprising an aqueous phase containing an acidic water-soluble polymer, wherein the acidic water-soluble polymer has a weight-average molecular weight of 10,000 or more and 100,000 or less, as determined according to the Example <Method of measuring molecular weight of acidic water-soluble polymer in aqueous phase>.

5. A slurry composition for a non-aqueous secondary battery electrode comprising the binder composition for a non-aqueous secondary battery electrode according to any one of claims 1 to 4, an electrode active material, and at least one of a dispersant and a viscosity modifier.

6. An electrode for a non-aqueous secondary battery comprising an electrode mixed material layer formed using the slurry composition for a non-aqueous secondary battery electrode according to claim 5.

7. A non-aqueous secondary battery comprising a positive electrode, a negative electrode, a separator, and an electrolyte solution, wherein
at least one of the positive electrode and the negative electrode is the electrode for a non-aqueous secondary battery according to claim 6.

## Patentansprüche

1. Eine Bindemittelzusammensetzung für eine Elektrode einer nichtwässrigen Sekundärbatterie, umfassend: ein teilchenförmiges Polymer, das aus einem statistischen Copolymer gebildet ist, das eine von einem aromatischen Vinylmonomer abgeleitete Struktureinheit, eine von einem konjugierten Dienmonomer abgeleitete Struktureinheit und eine von einem Säuremonomer abgeleitete Struktureinheit enthält, wobei
die von einem aromatischen Vinylmonomer abgeleitete Struktureinheit einen prozentualen Gehalt von mehr als 5 Massenprozent und höchstens 40 Massenprozent, bezogen auf 100 Massenprozent des teilchenförmigen Polymers, aufweist, und
die von einem konjugierten Dienmonomer abgeleitete Struktureinheit eine von Isopren abgeleitete Struktureinheit enthält und die von Isopren abgeleitete Struktureinheit einen prozentualen Anteil von 20 Massenprozent oder mehr, bezogen auf insgesamt 100 Massenprozent der von einem aromatischen Vinylmonomer abgeleiteten Struktureinheit, der von einem konjugierten Dienmonomer abgeleiteten Struktureinheit und der von einem Säuremonomer abgeleiteten Struktureinheit, aufweist, und wobei
die Bindemittelzusammensetzung für eine Elektrode einer nichtwässrigen Sekundärbatterie einen pH-Wert von 6 oder mehr und 9 oder weniger aufweist.

2. Die Bindemittelzusammensetzung für eine Elektrode einer nichtwässrigen Sekundärbatterie nach Anspruch 1, wobei die von einem Säuremonomer abgeleitete Struktureinheit einen prozentualen Anteil von 3 Massenprozent oder mehr und 9 Massenprozent oder weniger, bezogen auf 100 Massenprozent des teilchenförmigen Polymers, aufweist.

3. Die Bindemittelzusammensetzung für eine Elektrode einer nichtwässrigen Sekundärbatterie nach Anspruch 1 oder 2, wobei das teilchenförmige Polymer einen mittleren Teilchendurchmesser von 60 nm oder mehr und 300 nm oder weniger aufweist, bestimmt gemäß dem Beispiel <Mittlerer Teilchendurchmesser des teilchenförmigen Polymers>.

4. Die Bindemittelzusammensetzung für eine nichtwässrige Sekundärbatterie-Elektrode gemäß einem der Ansprüche 1 bis 3, umfassend eine wässrige Phase, die ein saures, wasserlösliches Polymer enthält, wobei das saure, wasserlösliche Polymer ein gewichtsmittleres Molekulargewicht von 10.000 oder mehr und 100.000 oder weniger aufweist, bestimmt gemäß dem Beispiel <Verfahren zur Bestimmung des Molekulargewichts eines sauren, wasserlöslichen Polymers in wässriger Phase>.

5. Eine Aufschlämmungszusammensetzung für eine nichtwässrige Sekundärbatterie-Elektrode, umfassend die Bindemittelzusammensetzung für eine nichtwässrige Sekundärbatterie-Elektrode gemäß einem der Ansprüche 1 bis 4, ein Elektroden-Aktivmaterial und mindestens eines aus einem Dispergiermittel und einem Viskositätsmodifikator.

6. Eine Elektrode für eine nichtwässrige Sekundärbatterie, umfassend eine Elektroden-Mischmaterialschicht, die unter Verwendung der Aufschlämmungszusammensetzung für eine nichtwässrige Sekundärbatterie-Elektrode gemäß Anspruch 5 gebildet wurde.

7. Eine nichtwässrige Sekundärbatterie, umfassend eine positive Elektrode, eine negative Elektrode, einen Separator und eine Elektrolytlösung, wobei
mindestens eine der positiven Elektrode und der negativen Elektrode die Elektrode für eine nichtwässrige Sekundärbatterie gemäß Anspruch 6 ist.

## Revendications

1. Composition de liant pour électrode de batterie secondaire non aqueuse, comprenant : un polymère particulaire formé à partir d'un copolymère statistique contenant une unité structurale dérivée d'un monomère vinylique aromatique, une unité structurale dérivée d'un monomère diène conjugué, et une unité structurale dérivée d'un monomère acide, dans laquelle
l'unité structurale dérivée d'un monomère vinylique aromatique a une teneur en pourcentage de plus de 5 % en masse et de 40 % en masse ou moins par rapport à 100 % en masse du polymère particulaire, et
l'unité structurale dérivée d'un monomère diène conjugué contient une unité structurale dérivée d'isoprène, et
l'unité structurale dérivée d'isoprène a une teneur en pourcentage de 20 % en masse ou plus par rapport à un total de 100 % en masse de l'unité structurale dérivée d'un monomère vinylique aromatique, de l'unité structurale dérivée d'un monomère diène conjugué, et de l'unité structurale dérivée d'un monomère acide, et dans laquelle
la composition de liant pour électrode de batterie secondaire non aqueuse a un pH de 6 ou plus et de 9 ou moins.

2. Composition de liant pour électrode de batterie secondaire non aqueuse selon la revendication 1, dans laquelle l'unité structurale dérivée d'un monomère acide a une teneur en pourcentage de 3 % en masse ou plus et de 9 % en masse ou moins par rapport à 100 % en masse du polymère particulaire.

3. Composition de liant pour électrode de batterie secondaire non aqueuse selon la revendication 1 ou 2, dans laquelle le polymère particulaire a un diamètre moyen de particule de 60 nm ou plus et de 300 nm ou moins, tel que déterminé selon l'Exemple <Diamètre moyen des particules de polymère en suspension>.

4. Composition de liant pour électrode de batterie secondaire non aqueuse selon l'une quelconque des revendications 1 à 3, comprenant une phase aqueuse contenant un polymère hydrosoluble acide, dans laquelle le polymère hydrosoluble acide a une masse moléculaire moyenne en poids de 10 000 ou plus et de 100 000 ou moins, telle que déterminée selon l'Exemple <Procédé de mesure du poids moléculaire d'un polymère acide soluble dans l'eau en phase aqueuse>.

5. Composition de pâte pour électrode de batterie secondaire non aqueuse comprenant la composition de liant pour électrode de batterie secondaire non aqueuse selon l'une quelconque des revendications 1 à 4, un matériau actif d'électrode, et au moins l'un d'un dispersant et d'un modificateur de viscosité.

6. Électrode pour batterie secondaire non aqueuse comprenant une couche de matériau mélangé d'électrode formée à l'aide de la composition de pâte pour électrode de batterie secondaire non aqueuse selon la revendication 5.

7. Batterie secondaire non aqueuse comprenant une électrode positive, une électrode négative, un séparateur et une solution électrolytique, dans laquelle au moins l'une de l'électrode positive et de l'électrode négative est l'électrode pour batterie secondaire non aqueuse selon la revendication 6.
